# EUROPEAN PATENT APPLICATION

(11) **EP 4 782 251 A1**
(43) Date of publication of application: **29.07.2026**
(21) Application number: 24869867.2
(22) Date of filing: 18.06.2024
(51) Int. Cl.: B60L 15/20

(54) **GEAR SHIFTING PROCESS CONTROL METHOD, CONTROLLER, SYSTEM, AND PURE ELECTRIC VEHICLE**

(30) Priority: 28.09.2023 CN 202311289762
(71) Applicant: Dongfeng Motor Group Co., Ltd., Wuhan, Hubei 430000 (CN)
(72) Inventor: ZHAO, Nafei, Wuhan, Hubei 430000 (CN); XU, Xinyi, Wuhan, Hubei 430000 (CN); ZHANG, Hao, Wuhan, Hubei 430000 (CN); LUO, Jianwu, Wuhan, Hubei 430000 (CN); LI, Zhaoming, Wuhan, Hubei 430000 (CN)
(74) Representative: Lohmanns Lohmanns & Partner mbB
(86) International application number: PCT/CN2024/099835
(87) International publication number: WO 2025/066305

(57) **Abstract**

A gear shifting process control method, comprising: in a neutral gear stage, acquiring a rotating speed control mode sent by an automatic speed change control device; on the basis of the rotating speed control mode, acquiring a target motor rotating speed; on the basis of the target motor rotating speed, controlling a driving motor to enter a quick speed-adjustment stage; in the quick speed-adjustment stage, using a first calibrated rotating speed and first limiting torque to iteratively control the driving motor to carry out speed adjustment; if a rotating speed difference between an actual motor rotating speed under quick speed-adjustment and the target motor rotating speed reaches a set rotating speed difference, controlling the driving motor to enter a slow speed-adjustment stage; and in the slow speed-adjustment stage, using a second calibrated rotating speed and second limiting torque to respectively replace the first calibrated rotating speed and the first limiting torque, and continuously iteratively controlling the driving motor to carry out speed adjustment until gear engagement is completed. Further provided are a controller, a system, and a pure electric vehicle.

## Description

The present application claims priority to Chinese Patent Application No. 202311289762.3, filed on September 28, 2023, the entire contents of which are incorporated herein by reference.

### Field of the Invention

The present application relates to the technical field of pure electric vehicles, and in particular to a gear shifting process control method, a controller, a system, and a pure electric vehicle.

### Background of the Invention

At present, various vehicle types exist on the market, comprising but not limited to fuel vehicles, hybrid vehicles, and pure electric vehicles. The drive system of a fuel vehicle mainly relies on a multi-gear transmission and a clutch in coordination to achieve vehicle propulsion, whereas a pure electric vehicle, as a low-emission and high-efficiency new energy vehicle, differs from the fuel vehicle in that it eliminates the multi-gear transmission and the clutch coordination for multi-gear drive. Instead, the pure electric vehicle uses an automatic speed change system to control two-gear transmission shifting and relies on the rotating speed adjustment function of the driving motor to synchronize the motor rotating speed with the gear rotating speed of the next gear during the gear shifting process.

It is well known that controlling the gear shifting process of the pure electric vehicle requires ensuring overall vehicle smoothness during gear shifting. Insufficient control during the gear shifting process may result in shift shocks, gear clash, and other issues, significantly reducing vehicle smoothness and comfort.

Therefore, how to effectively control the gear shifting process of the pure electric vehicle and ensure overall vehicle smoothness is a problem that urgently needs to be solved.

### Summary of the Invention

### Problem of the Invention

The present application provides a gear shifting process control method, controller, system, and pure electric vehicle, which perform iterative control using different calibrated parameters based on rotating speed differences at different speed adjustment stages so as to solve or partially solve the technical problem that a pure electric vehicle cannot ensure overall vehicle smoothness during gear shifting, effectively improve the motor rotating speed response time in the early stage of speed adjustment, enhance motor reaction efficiency, and stabilize the motor rotating speed in the later stage of speed adjustment, thereby preventing shift shocks, gear engagement failure, and other issues, and ensuring overall vehicle smoothness and gear engagement success rate during the gear shifting process of the pure electric vehicle while also extending the service life of the gearbox hardware of the pure electric vehicle.

### Solution of the Invention

In a first aspect, the present application discloses a gear shifting process control method, applied to a pure electric vehicle, and the method comprises:
in a neutral gear stage, acquiring a rotating speed control mode sent by an automatic speed change control device;
acquiring a target motor rotating speed based on the rotating speed control mode;
controlling a driving motor to enter a quick speed-adjustment stage based on the target motor rotating speed; and in the quick speed-adjustment stage, utilizing a first calibrated rotating speed and a first limiting torque to iteratively control the driving motor to perform speed adjustment; and
controlling the driving motor to enter a slow speed-adjustment stage if a rotating speed difference between an actual motor rotating speed under the quick speed-adjustment stage and the target motor rotating speed reaches a set rotating speed difference; and in the slow speed-adjustment stage, utilizing a second calibrated rotating speed and a second limiting torque to respectively replace the first calibrated rotating speed and the first limiting torque, and continuously iteratively controlling the driving motor to perform speed adjustment until gear engagement is completed; wherein the second calibrated rotating speed is less than the first calibrated rotating speed, and the second limiting torque is less than the first limiting torque.

Prior to the neutral gear stage, the method further comprises:
in a torque reduction stage, receiving a control instruction from a vehicle controller based on a target gear to perform a corresponding torque reduction operation; and
in a gear disengagement stage, receiving a torque control mode sent by the automatic speed change control device when the torque is reduced to a target range, and performing a gear disengagement operation according to a first torque control instruction carried in the torque control mode; wherein the torque control mode is configured to characterize a switch of a control main body from the vehicle controller to the automatic speed change control device.

In some embodiments, the first calibrated rotating speed comprises a first rotating speed proportional parameter and a first rotating speed integral parameter based on the rotating speed difference; the first limiting torque is a motor allowable torque calculated by the vehicle controller according to battery capacity, and is configured to prevent overcharge or overdischarge of the battery; and
the step of utilizing the first calibrated rotating speed and the first limiting torque to iteratively control the driving motor to perform speed adjustment specifically comprises:
utilizing the first rotating speed proportional parameter and the first rotating speed integral parameter to iteratively control the driving motor to perform speed adjustment, and utilizing the first limiting torque to limit torque of the driving motor.

In some embodiments, after the rotating speed difference between the actual motor rotating speed under the quick speed-adjustment stage and the target motor rotating speed reaches the set rotating speed difference, the method further comprises:
detecting a gear shifting process value and a control mode of the automatic speed change control device; and
controlling the driving motor to enter the slow speed-adjustment stage if the gear shifting process value is 4 and the control mode is the rotating speed control mode.

In some embodiments, the second calibrated rotating speed comprises a second rotating speed proportional parameter and a second rotating speed integral parameter based on the rotating speed difference; the second rotating speed proportional parameter is less than the first rotating speed proportional parameter, and the second rotating speed integral parameter is less than the first rotating speed integral parameter;
the step of utilizing the second calibrated rotating speed and the second limiting torque to respectively replace the first calibrated rotating speed and the first limiting torque, and continuously iteratively controlling the driving motor to perform speed adjustment until gear engagement is completed specifically comprises:
utilizing the second rotating speed proportional parameter, the second rotating speed integral parameter, and the second limiting torque to respectively replace the first rotating speed proportional parameter, the first rotating speed integral parameter, and the first limiting torque, and continuously iteratively controlling the driving motor to perform speed adjustment until gear engagement is completed; wherein the second limiting torque is a motor allowable torque calculated by the automatic speed change control device according to a torque requirement for gear engagement, and is configured to prevent gear engagement failure due to excessive torque.

In some embodiments, after gear engagement is completed, the method further comprises:
receiving a torque control mode sent by the automatic speed change control device, and switching from the rotating speed control mode to the torque control mode.

In some embodiments, after utilizing the second calibrated rotating speed and the second limiting torque to respectively replace the first calibrated rotating speed and the first limiting torque, and continuously iteratively controlling the driving motor to perform speed adjustment until gear engagement is completed, the method further comprises:
in a torque increase stage, receiving a zero-torque mode and an actual gear sent by the automatic speed change control device; and
receiving a torque increase command from the vehicle controller based on the zero-torque mode and the actual gear, wherein the zero-torque mode is configured to characterize a switch of a control main body from the automatic speed change control device to the vehicle controller.

In a second aspect, the present application discloses a gear shifting process controller, applied to a pure electric vehicle, and the gear shifting process controller comprises:
a first acquisition module, which is configured to, in a neutral gear stage, acquire a rotating speed control mode sent by an automatic speed change control device;
a second acquisition module, which is configured to acquire a target motor rotating speed based on the rotating speed control mode;
a first control module, which is configured to control a driving motor to enter a quick speed-adjustment stage based on the target motor rotating speed; and in the quick speed-adjustment stage, utilize a first calibrated rotating speed and a first limiting torque to iteratively control the driving motor to perform speed adjustment; and
a second control module, which is configured to control the driving motor to enter a slow speed-adjustment stage if a rotating speed difference between an actual motor rotating speed under the quick speed-adjustment stage and the target motor rotating speed reaches a set rotating speed difference; and in the slow speed-adjustment stage, utilize a second calibrated rotating speed and a second limiting torque to respectively replace the first calibrated rotating speed and the first limiting torque, and continuously iteratively control the driving motor to perform speed adjustment until gear engagement is completed; wherein the second calibrated rotating speed is less than the first calibrated rotating speed, and the second limiting torque is less than the first limiting torque.

In a third aspect, the present application discloses a gear shifting process control system, applied to a pure electric vehicle, and the gear shifting process control system comprises a gear shifting process controller and an automatic speed change control device; wherein the gear shifting process controller is configured to implement gear shifting control through the above gear shifting process control method.

In a fourth aspect, the present application discloses a pure electric vehicle, and gear shifting control is implemented through the above gear shifting process control method.

### Beneficial Effects

Through one or more of the technical solutions of the present application, the present application achieves the following beneficial effects or advantages:
In the present application, a rotating speed control mode sent by an automatic speed change control device is taken as a triggering mechanism to perform speed adjustment of a driving motor, and divides speed adjustment control of the driving motor into a quick speed-adjustment stage and a slow speed-adjustment stage. Different calibrated parameters based on rotating speed differences are utilized for iterative control in different speed adjustment stages, so that the motor rotating speed response time can be effectively improved in the early stage of speed adjustment, the motor reaction efficiency can be enhanced, and the motor rotating speed can be effectively stabilized in the later stage of speed adjustment, thereby preventing shift shocks, gear engagement failure, and other issues, ensuring overall vehicle smoothness and gear engagement success rate during the gear shifting process of the pure electric vehicle, while also extending the service life of the gearbox hardware of the pure electric vehicle.

The above description is only an overview of the technical solutions of the present application, in order to more clearly understand the technical means of the present application, the present application can be implemented according to the contents of the description, and in order to make the above and other objectives, features, and advantages of the present application more apparent and comprehensible, specific embodiments of the present application are described below.

### Brief Description of the Drawings

Various other advantages and benefits will become apparent to those skilled in the art upon reading the detailed description of the preferred embodiments below. The drawings are provided only for the purpose of illustrating the preferred embodiments and are not intended to limit the present application. Moreover, throughout the drawings, the same reference numerals denote the same components.

In the figures:
Fig. 1 is a flowchart of a gear shifting process control method in one embodiment of the present application;
Fig. 2 is a structural diagram of a gear shifting process controller in one embodiment of the present application;
Fig. 3 is a structural diagram of a gear shifting process control system in one embodiment of the present application.

### Detailed Description of the Embodiments

The exemplary embodiments of the present application will be described in more detail below with reference to the drawings. Although exemplary embodiments of the present application are shown in the drawings, it should be understood that the present application may be implemented in various forms and should not be limited to the embodiments described herein. On the contrary, these embodiments are provided so that the present application can be more thoroughly understood and the scope of the present application can be fully conveyed to those skilled in the art.

The present application discloses a gear shifting process control method applied to a pure electric vehicle, mainly for controlling the gear shifting process of the two-gear transmission of the pure electric vehicle, thereby effectively ensuring overall vehicle smoothness and gear engagement success rate during the gear shifting process of the pure electric vehicle, and extending the service life of the gearbox hardware of the pure electric vehicle.

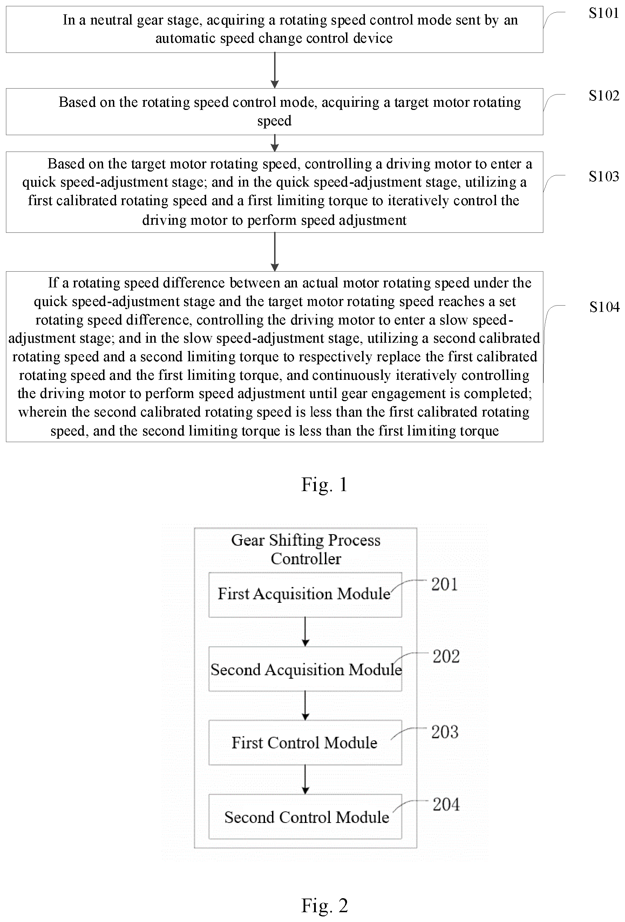

Referring to Fig. 1, Fig. 1 is a flowchart illustrating a gear shifting process control method in the embodiment of the present application, and the gear shifting process control method disclosed in the embodiment of the present application comprises the following steps:
S101. In a neutral gear stage, a rotating speed control mode sent by an automatic speed change control device is acquired.
S102: A target motor rotating speed is acquired based on the rotating speed control mode.
S103: A driving motor is controlled to enter a quick speed-adjustment stage based on the target motor rotating speed; and in the quick speed-adjustment stage, a first calibrated rotating speed and a first limiting torque are utilized to iteratively control the driving motor to perform speed adjustment.
S104. The driving motor is controlled to enter a slow speed-adjustment stage if a rotating speed difference between an actual motor rotating speed under the quick speed-adjustment stage and the target motor rotating speed reaches a set rotating speed difference; and in the slow speed-adjustment stage, a second calibrated rotating speed and a second limiting torque are utilized to respectively replace the first calibrated rotating speed and the first limiting torque, and the driving motor is continuously iteratively controlled to perform speed adjustment until gear engagement is completed; wherein the second calibrated rotating speed is less than the first calibrated rotating speed, and the second limiting torque is less than the first limiting torque.

In the present solution, the rotating speed control mode sent by the automatic speed change control device is taken as a triggering mechanism to perform speed adjustment of the driving motor, and divides speed adjustment control of the driving motor into the quick speed-adjustment stage and the slow speed-adjustment stage. Different calibrated parameters based on rotating speed differences are utilized for iterative control in different speed adjustment stages, so that the motor rotating speed response time can be effectively improved in the early stage of speed adjustment, the motor reaction efficiency can be enhanced, and the motor rotating speed can be effectively stabilized in the later stage of speed adjustment, thereby preventing shift shocks, gear engagement failure, and other issues, ensuring overall vehicle smoothness and gear engagement success rate during the gear shifting process of the pure electric vehicle, while also extending the service life of the gearbox hardware of the pure electric vehicle.

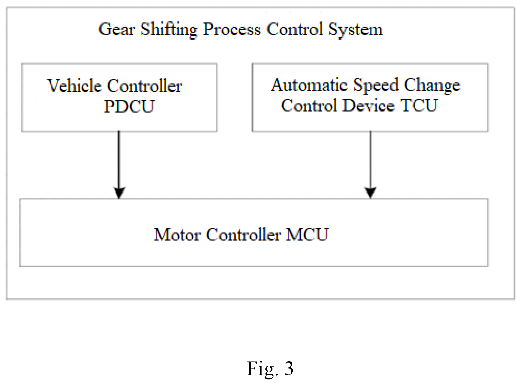

The gear shifting process of the pure electric vehicle comprises five control stages: a torque reduction stage, a gear disengagement stage, a neutral gear stage, a gear engagement stage, and a torque increase stage. In addition, speed adjustment control of the driving motor during the gear shifting process is implemented through interaction among a vehicle controller, an automatic speed change control device, and a gear shifting process controller. A structural diagram of the three is shown in Fig. 3. The gear shifting process controller is exemplarily a motor controller in the embodiment of the present application, and is applied to the pure electric vehicle. For ease of description and explanation of the embodiments of the present application, the process control logic of the present application is described below according to the five control stages described above.

Before performing the relevant operations in the neutral gear stage of S101, the method further comprises operations related to the torque reduction stage and the gear disengagement stage, specifically as follows:
In the torque reduction stage, a control instruction is received from a vehicle controller based on a target gear to perform a corresponding torque reduction operation. Specifically, the motor controller is controlled by the vehicle controller to perform the corresponding torque reduction operation during the torque reduction stage. The control instruction based on the target gear is adopted to instruct the motor controller to perform a torque reduction to zero operation. Therefore, after the motor controller receives the control instruction sent by the vehicle controller, the corresponding torque reduction operation is performed to gradually reduce torque to a set range.

In the gear disengagement stage, when the torque is reduced to a target range, the motor controller is controlled by the automatic speed change control device to perform a corresponding gear disengagement operation during the torque reduction stage. Specifically, a torque control mode sent by the automatic speed change control device is received, and the gear disengagement operation is performed according to a first torque control instruction carried in the torque control mode. The torque control mode is configured to characterize a switch of a control main body from the vehicle controller to the automatic speed change control device. After receiving the torque control mode sent by the automatic speed change control device, the motor controller preferentially executes the control instruction of the automatic speed change control device, and performs the gear disengagement operation with zero torque as a target.

The gear disengagement stage is a stage in which the motor controller switches the control main body. Since smoothness of gear shifting cannot be ensured under control of the vehicle controller, the control main body is switched from the vehicle controller to the automatic speed change control device, so that the rotating speed of the driving motor can be subsequently adjusted by different means to match gear shifting operations. As a result, the motor rotating speed response time can be effectively improved in the early stage of speed adjustment, the motor reaction efficiency can be enhanced, and the motor rotating speed can be effectively stabilized in the later stage of speed adjustment, thereby preventing shift shocks, gear engagement failure, and other issues, and ensuring smoothness and success rate of gear shifting.

A condition for switching the control main body is that the motor controller receives a torque control mode or a rotating speed control mode sent by the automatic speed change control device. When the motor controller receives any one of the above control modes, the motor controller preferentially executes the corresponding control instruction of the automatic speed change control device.

In the neutral gear stage, the motor controller performs speed adjustment on the driving motor to facilitate subsequent gear engagement. In order to ensure that the motor rotating speed response time is effectively reduced in the early stage of speed adjustment, and the motor reaction efficiency is improved, during implementation of S101, the rotating speed control mode sent by the automatic speed change control device is acquired, and the priority of control authority of the automatic speed change control device is adjusted according to the rotating speed control mode, such that the priority of the control authority of the automatic speed change control device is higher than that of the vehicle controller.

During implementation of S102, the rotating speed control mode carries a target motor rotating speed. The target motor rotating speed is a motor rotating speed required for shifting from the current gear to the target gear. When the target motor rotating speed is acquired, execution of S103 is triggered.

During implementation of S103, the motor controller is controlled by the automatic speed change control device to control the driving motor to perform quick speed adjustment. The quick speed-adjustment stage belongs to the neutral gear stage and is configured to perform speed adjustment on the driving motor in the neutral gear stage, so that a speed adjustment time of the driving motor is controlled within a set time threshold, thereby rapidly increasing the motor rotating speed of the driving motor within the set time threshold, such that a rotating speed difference between an actual motor rotating speed of the driving motor and the target motor rotating speed reaches a set rotating speed difference within the set time threshold. The set time threshold is determined and output by the vehicle controller according to a vehicle model. Taking a set rotating speed difference of 400 rpm as an example, the set time threshold is exemplarily 200 milliseconds. It should be noted that the set rotating speed difference and the set time threshold may vary depending on vehicle models.

In a specific implementation, the first calibrated rotating speed comprises a first rotating speed proportional parameter and a first rotating speed integral parameter based on the rotating speed difference; and the first limiting torque is a motor allowable torque calculated by the vehicle controller according to battery capacity, and is configured to prevent overcharge or overdischarge of the battery.

Therefore, in the quick speed-adjustment stage, the first rotating speed proportional parameter and the first rotating speed integral parameter are utilized to iteratively control the driving motor to perform speed adjustment, so that the driving motor rapidly reduces the rotating speed difference with respect to the target motor rotating speed, thereby effectively shortening the motor rotating speed response time and improving the motor reaction efficiency.

In one embodiment, since the quick speed-adjustment stage features a fast response speed and requires a large torque, if the torque is out of control, overcharge or overdischarge of the battery may occur. Therefore, on the basis that the speed adjustment time satisfies the set time threshold, the first limiting torque is utilized to limit the torque of the driving motor, that is, the first limiting torque is utilized to limit an output torque of the motor controller, such that the torque of the driving motor is achieved within the first limiting torque. The first limiting torque is a motor allowable torque calculated by the vehicle controller according to battery capacity, and is capable of preventing overcharge or overdischarge of the battery.

For the motor controller, in the gear engagement stage, if the rotating speed difference between the actual motor rotating speed under the quick speed-adjustment stage and the target motor rotating speed reaches a set rotating speed difference, the driving motor is controlled to enter the slow speed-adjustment stage, and relevant control instructions of the automatic speed change control device continue to be preferentially executed.

In one embodiment, the switching condition between the quick speed-adjustment stage and the slow speed-adjustment stage is that a gear shifting process value of the automatic speed change control device is 4 and the control mode of the automatic speed change control device is the rotating speed control mode. If the motor controller detects the above conditions, it can control the driving motor to switch from the quick speed-adjustment stage to the slow speed-adjustment stage. Specifically, the motor controller detects the gear shifting process value and the control mode of the automatic speed change control device; if the gear shifting process value is 4 and the control mode is the rotating speed control mode, the driving motor is controlled to enter the slow speed-adjustment stage.

The slow speed-adjustment stage belongs to the gear engagement stage and is configured to perform weak speed adjustment on the driving motor after the rotating speed difference between the actual motor rotating speed and the target motor rotating speed reaches a set rotating speed difference, so that the rotating speed difference between the actual motor rotating speed of the driving motor and the target motor rotating speed approaches zero, thereby facilitating execution of the gear engagement operation. It is noteworthy that in the slow speed-adjustment stage, the motor controller still adopts rotating speed control rather than torque control. This is because adopting torque control (for example, a torque control instruction of zero torque control) during the gear engagement stage may cause the motor rotating speed to fall and rise, resulting in large fluctuations that could lead to gear engagement failure or shift shocks. To prevent such incidents and ensure smoothness and success of gear engagement, the rotating speed control mode is still employed.

Since the motor controller in the slow speed-adjustment stage does not require a high response speed and only needs to stabilize the actual motor rotating speed, in the implementation of S104, the second calibrated rotating speed is adopted to replace the first calibrated rotating speed, and the driving motor is continuously iteratively controlled to perform speed adjustment until gear engagement is completed. The second calibrated rotating speed is less than the first calibrated rotating speed, enabling the motor controller to iteratively control the driving motor according to a smaller calibrated rotating speed, thereby ensuring smoothness of gear engagement.

The second calibrated rotating speed comprises a second rotating speed proportional parameter and a second rotating speed integral parameter based on the rotating speed difference; and the second rotating speed proportional parameter is less than the first rotating speed proportional parameter, and the second rotating speed integral parameter is less than the first rotating speed integral parameter. Therefore, the second rotating speed proportional parameter and the second rotating speed integral parameter are utilized to respectively replace the first rotating speed proportional parameter and the first rotating speed integral parameter, and the driving motor is continuously iteratively controlled to perform speed adjustment until gear engagement is completed. In the slow speed-adjustment stage, the motor rotating speed can be stabilized, thereby ensuring smoothness and success rate of gear engagement, and extending the service life of the gearbox hardware.

In one embodiment, in the slow speed-adjustment stage, the motor torque during gear engagement should not be too high, as excessive torque may cause gear engagement failure. Therefore, in order to ensure successful gear engagement, the second limiting torque is less than the first limiting torque so as to guarantee the success rate of gear engagement. Specifically, the second limiting torque is utilized to replace the first limiting torque, and the driving motor is continuously iteratively controlled to perform speed adjustment until gear engagement is completed. The second limiting torque is a motor allowable torque calculated by the automatic speed change control device according to the torque requirement for gear engagement, and is configured to prevent gear engagement failure due to excessive torque.

In one embodiment, after gear engagement is completed, the torque control mode sent by the automatic speed change control device is received, switching from the rotating speed control mode to the torque control mode, thereby ensuring that the driving motor quickly returns to the torque control mode after gear engagement.

After gear engagement is completed, the process enters a torque increase stage. In the torque increase stage, the control main body of the motor controller switches from the automatic speed change control device to the vehicle controller. Specifically, in the torque increase stage, a zero-torque mode and the actual gear sent by the automatic speed change control device are received. The zero-torque mode is configured to characterize the switch of the control main body from the automatic speed change control device to the vehicle controller, and the purpose of sending the zero-torque mode by the automatic speed change control device is to relinquish control over the motor controller. The actual gear is configured to update the motor controller.

For the motor controller, based on the zero-torque mode and the actual gear, a torque increase command is received from the vehicle controller. Specifically, the actual gear is updated to the target gear, and the torque increase command from the vehicle controller is received.

The above describes the process control logic of the five control stages for gear shifting process control in the present application. Through implementing improvements in each of the five stages, the overall vehicle smoothness and gear engagement success during the gear shifting process of the pure electric vehicle can be ensured, while also extending the service life of the gearbox hardware.

Based on the same inventive concept, the following embodiment discloses a gear shifting process controller, applied to a pure electric vehicle. Referring to Fig. 2, the gear shifting process controller comprises:
a first acquisition module 201, which is configured to, in a neutral gear stage, acquire a rotating speed control mode sent by an automatic speed change control device;
a second acquisition module 202, which is configured to acquire a target motor rotating speed based on the rotating speed control mode;
a first control module 203, which is configured to control a driving motor to enter a quick speed-adjustment stage based on the target motor rotating speed; and in the quick speed-adjustment stage, utilize a first calibrated rotating speed and a first limiting torque to iteratively control the driving motor to perform speed adjustment;
a second control module 204, which is configured to control the driving motor to enter a slow speed-adjustment stage if a rotating speed difference between an actual motor rotating speed under the quick speed-adjustment stage and the target motor rotating speed reaches a set rotating speed difference; and in the slow speed-adjustment stage, utilize a second calibrated rotating speed and a second limiting torque to respectively replace the first calibrated rotating speed and the first limiting torque, and continuously iteratively control the driving motor to perform speed adjustment until gear engagement is completed; wherein the second calibrated rotating speed is less than the first calibrated rotating speed, and the second limiting torque is less than the first limiting torque.

Based on the same inventive concept, the following embodiment discloses a gear shifting process control system, applied to a pure electric vehicle. Referring to Fig. 3, the gear shifting process control system comprises a gear shifting process controller, an automatic speed change control device (known as transmission control unit, TCU), and a vehicle controller (known as powertrain drive control unit, PDCU). The gear shifting process controller is configured to implement gear shifting control through the gear shifting process control method described in one or more of the above embodiments. In the present embodiment, the gear shifting process controller is exemplified as a motor controller (known as motor control unit, MCU).

The gear shifting process of the pure electric vehicle comprises five control stages: a torque reduction stage, a gear disengagement stage, a neutral gear stage, a gear engagement stage, and a torque increase stage. In addition, speed adjustment control of the driving motor during the gear shifting process is implemented through the interaction of the PDCU, the TCU, and the MCU.

In the torque reduction stage, control of torque reduction is mainly implemented through the PDCU. Specifically, after the PDCU determines the target gear, it sends the target gear and a torque mode to the MCU to perform torque reduction to zero. The torque mode carries a control instruction for performing torque reduction to zero. The MCU executes the corresponding torque reduction operation upon receiving the control instruction from the PDCU based on the target gear. During this stage, the TCU monitors the real-time torque reduction value of the MCU, and the gear shifting process value of the TCU is set to 1.

In the gear disengagement stage, the TCU obtains control authority over the MCU from the PDCU, and the gear shifting process value of the TCU is set to 2. Specifically, the TCU comprises three modes: torque control mode, rotating speed control mode, and zero-torque mode. The torque control mode is configured to characterize a switch of the control main body from the PDCU to the TCU, and to guide the MCU to adjust the driving motor with reference to torque. The rotating speed control mode is configured to guide the MCU to adjust the driving motor with reference to rotating speed. The zero-torque mode is configured to exit control over the MCU and transfer control authority of the MCU back to the PDCU.

The TCU monitors the real-time torque reduction value of the MCU, and when the torque reduction reaches the target range, the TCU sends the torque control mode to the MCU to obtain control authority over the MCU, thereby controlling the MCU to perform a gear disengagement operation. For the MCU, upon receiving the torque control mode from the TCU, the MCU gives priority to processing control instructions from the TCU. Specifically, the MCU performs the gear disengagement operation according to a first torque control instruction carried in the torque control mode. The first torque control instruction is configured to guide the MCU to perform gear disengagement at zero torque.

After gear disengagement is completed, the process enters the neutral gear stage.

In the neutral gear stage of this embodiment, the MCU adjusts the rotating speed of the driving motor to make the difference between the actual motor rotating speed and the target motor rotating speed approach zero, so as to complete gear engagement. In order to ensure that the motor rotating speed response time is effectively reduced in the early stage of speed adjustment, and the motor reaction efficiency is improved, in the neutral gear stage, the TCU sends a rotating speed mode to the MCU, continuing to have priority control over the MCU; during this process, the gear shifting process value of the TCU is set to 3. The rotating speed instruction corresponds to the target motor rotating speed of the target gear, requiring the MCU to control the driving motor for rapid response, thereby effectively shortening the motor rotating speed response time and improving motor reaction efficiency.

For the MCU, the MCU gives priority to executing the rotating speed control mode sent by the TCU. Specifically, the MCU performs S101 to S103 to control the driving motor to enter the quick speed-adjustment stage. The quick speed-adjustment stage belongs to the neutral gear stage and is configured to perform quick speed adjustment on the driving motor in the neutral gear stage, so that a speed adjustment time of the driving motor is controlled within a set time threshold, thereby rapidly increasing the motor rotating speed of the driving motor within the set time threshold, such that a rotating speed difference between an actual motor rotating speed of the driving motor and the target motor rotating speed reaches a set rotating speed difference within the set time threshold. An example of the set time threshold is 0.5 s, which does not impose a limitation.

In the quick speed-adjustment stage, a first calibrated rotating speed and a first limiting torque are utilized to iteratively control the driving motor to perform speed adjustment. The first calibrated rotating speed comprises a first rotating speed proportional parameter and a first rotating speed integral parameter based on the rotating speed difference. Therefore, the first rotating speed proportional parameter and the first rotating speed integral parameter are utilized to iteratively control the driving motor to perform speed adjustment, so that the rotating speed difference between the driving motor rotating speed and the target motor rotating speed is rapidly reduced, thereby effectively shortening the motor rotating speed response time and improving the motor reaction efficiency.

In one embodiment, since the quick speed-adjustment stage features a fast response speed and requires a large torque, if the torque is out of control, overcharge or overdischarge of the battery may occur. Therefore, on the basis that the speed adjustment time satisfies the set time threshold, the first limiting torque is utilized to limit the torque of the driving motor, that is, the first limiting torque is utilized to limit an output torque of the MCU, such that the torque of the driving motor is achieved within the first limiting torque. The first limiting torque is a motor allowable torque calculated by the PDCU according to battery capacity, and is capable of preventing overcharge or overdischarge of the battery.

In one embodiment, the TCU monitors in real time whether the actual motor rotating speed under the quick speed-adjustment stage and the target motor rotating speed reach the set rotating speed difference. If so, the system enters the gear engagement stage, and the TCU continuously sends a rotating speed mode to the MCU, with a rotating speed instruction calculated based on vehicle speed as the actual motor rotating speed, and during this process, the gear shifting process value of the TCU is set to 4.

For the MCU, in the gear engagement stage, if the rotating speed difference between the actual motor rotating speed under the quick speed-adjustment stage and the target motor rotating speed reaches the set rotating speed difference, the driving motor is controlled to enter the slow speed-adjustment stage.

In one embodiment, the switching condition between the quick speed-adjustment stage and the slow speed-adjustment stage is that a gear shifting process value of the TCU is 4 and the control mode of the TCU is the rotating speed control mode. If the MCU detects the above conditions, it can control the driving motor to switch from the quick speed-adjustment stage to the slow speed-adjustment stage. Specifically, for the MCU, the gear shifting process value and the control mode of the TCU are detected; if the gear shifting process value is 4 and the control mode is the rotating speed control mode, the driving motor is controlled to enter the slow speed-adjustment stage.

The slow speed-adjustment stage belongs to the gear engagement stage, and is configured to perform weak speed adjustment on the driving motor after the rotating speed difference between the actual motor rotating speed and the target motor rotating speed reaches a set rotating speed difference, so that the actual motor rotating speed of the driving motor and the target motor rotating speed approach zero, thereby facilitating execution of the gear engagement operation. It is noteworthy that in the slow speed-adjustment stage, the MCU still adopts rotating speed control rather than torque control. This is because adopting torque control (for example, a torque control instruction of zero torque control) during the gear engagement stage may cause the motor rotating speed to fall and rise, resulting in large fluctuations that could lead to gear engagement failure or shift shocks. To prevent such incidents and ensure smoothness and success of gear engagement, the rotating speed control mode is still employed.

Since the MCU in the slow speed-adjustment stage does not require a high response speed and only needs to stabilize the actual motor rotating speed, the second calibrated rotating speed is adopted to replace the first calibrated rotating speed, and the driving motor is continuously iteratively controlled to perform speed adjustment until gear engagement is completed. The second calibrated rotating speed is less than the first calibrated rotating speed, enabling the MCU to iteratively control the driving motor according to a smaller calibrated rotating speed, thereby ensuring smoothness of gear engagement. The second calibrated rotating speed comprises a second rotating speed proportional parameter and a second rotating speed integral parameter based on the rotating speed difference; and the second rotating speed proportional parameter is less than the first rotating speed proportional parameter, and the second rotating speed integral parameter is less than the first rotating speed integral parameter. Therefore, the second rotating speed proportional parameter and the second rotating speed integral parameter are utilized to respectively replace the first rotating speed proportional parameter and the first rotating speed integral parameter, and the driving motor is continuously iteratively controlled to perform speed adjustment until gear engagement is completed, thereby ensuring smoothness and success rate of gear engagement, and extending the service life of the gearbox hardware.

In one embodiment, in the slow speed-adjustment stage, the motor torque during gear engagement should not be too high, as excessive torque may cause gear engagement failure. Therefore, in order to ensure successful gear engagement, the second limiting torque is less than the first limiting torque so as to guarantee the success rate of gear engagement. Specifically, the second limiting torque is utilized to replace the first limiting torque, and the driving motor is continuously iteratively controlled to perform speed adjustment until gear engagement is completed. The second limiting torque is a motor allowable torque calculated by the TCU according to the torque requirement for gear engagement, and is configured to prevent gear engagement failure due to excessive torque.

In one embodiment, the target motor rotating speed of the TCU in the gear engagement stage is fine-tuned according to the actual vehicle speed, thereby facilitating smoother gear shifting.

When the rotating speed difference between the actual motor rotating speed and the target motor rotating speed approaches zero, the MCU controls the execution of the gear engagement operation, and after gear engagement is completed, receives a torque control mode sent by the TCU, switching from the rotating speed control mode to the torque control mode, thereby ensuring that the driving motor quickly returns to the torque control mode after gear engagement. At this time, the gear shifting process value of the TCU is set to 4.

After gear engagement is completed, the process enters a torque increase stage. In the torque increase stage, the PDCU obtains control authority to perform corresponding control over the MCU. Specifically, the TCU sends a zero-torque mode and an actual gear to the MCU. The zero-torque mode is configured to characterize the switch of the control main body from the TCU to the PDCU, and the purpose of sending the zero-torque mode by the TCU is to relinquish control over the MCU. During this process, the gear shifting process value of the TCU is set to 5. The actual gear is configured to update the MCU.

For the MCU, the zero-torque mode and the actual gear sent by the TCU are received; based on the zero-torque mode and the actual gear, the torque increase command from the PDCU is received. Specifically, the actual gear is updated to the target gear; when the PDCU detects that the actual gear is the target gear, a torque instruction is updated, so that MCU is taken over. For the MCU, the torque increase command from the PDCU is received based on the zero-torque mode.

Based on the same inventive concept, the following embodiment discloses a pure electric vehicle, and the gear shifting control is implemented through the gear shifting process control method described in one or more of the above embodiments.

Even though the optional embodiments of the present application have been described, those skilled in the art, once aware of the underlying inventive concept, can make various modifications and changes to these embodiments. Therefore, the appended claims are intended to be construed to comprise the optional embodiments as well as all changes and modifications falling within the scope of the present application.

Obviously, those skilled in the art can make various modifications and variations to the present application without departing from its spirit and scope of the present application. Thus, in the event that these modifications and variations of the present application are within the protection scope of the claims and the equivalents thereof, the present application also intends to comprise such modifications and variations.

## Claims

1. A gear shifting process control method, applied to a pure electric vehicle, comprising:
in a neutral gear stage, acquiring a rotating speed control mode sent by an automatic speed change control device;
acquiring a target motor rotating speed based on the rotating speed control mode;
controlling a driving motor to enter a quick speed-adjustment stage based on the target motor rotating speed; and in the quick speed-adjustment stage, utilizing a first calibrated rotating speed and a first limiting torque to iteratively control the driving motor to perform speed adjustment; and
controlling the driving motor to enter a slow speed-adjustment stage if a rotating speed difference between an actual motor rotating speed under the quick speed-adjustment stage and the target motor rotating speed reaches a set rotating speed difference; and in the slow speed-adjustment stage, utilizing a second calibrated rotating speed and a second limiting torque to respectively replace the first calibrated rotating speed and the first limiting torque, and continuously iteratively controlling the driving motor to perform speed adjustment until gear engagement is completed; wherein the second calibrated rotating speed is less than the first calibrated rotating speed, and the second limiting torque is less than the first limiting torque.

2. The method according to claim 1, wherein, prior to the neutral gear stage, the method further comprises:
in a torque reduction stage, receiving a control instruction from a vehicle controller based on a target gear to perform a corresponding torque reduction operation; and
in a gear disengagement stage, receiving a torque control mode sent by the automatic speed change control device when the torque is reduced to a target range, and performing a gear disengagement operation according to a first torque control instruction carried in the torque control mode; wherein the torque control mode is configured to characterize a switch of a control main body from the vehicle controller to the automatic speed change control device.

3. The method according to claim 1, wherein the first calibrated rotating speed comprises a first rotating speed proportional parameter and a first rotating speed integral parameter based on the rotating speed difference; the first limiting torque is a motor allowable torque calculated by the vehicle controller according to battery capacity, and is configured to prevent overcharge or overdischarge of the battery; and
the step of utilizing the first calibrated rotating speed and the first limiting torque to iteratively control the driving motor to perform speed adjustment specifically comprises:
utilizing the first rotating speed proportional parameter and the first rotating speed integral parameter to iteratively control the driving motor to perform speed adjustment, and utilizing the first limiting torque to limit torque of the driving motor.

4. The method according to claim 3, wherein, after the rotating speed difference between the actual motor rotating speed under the quick speed-adjustment stage and the target motor rotating speed reaches the set rotating speed difference, the method further comprises:
detecting a gear shifting process value and a control mode of the automatic speed change control device; and
controlling the driving motor to enter the slow speed-adjustment stage if the gear shifting process value is 4 and the control mode is the rotating speed control mode.

5. The method according to claim 1, wherein the second calibrated rotating speed comprises a second rotating speed proportional parameter and a second rotating speed integral parameter based on the rotating speed difference; the second rotating speed proportional parameter is less than the first rotating speed proportional parameter, and the second rotating speed integral parameter is less than the first rotating speed integral parameter;
the step of utilizing the second calibrated rotating speed and the second limiting torque to respectively replace the first calibrated rotating speed and the first limiting torque, and continuously iteratively controlling the driving motor to perform speed adjustment until gear engagement is completed specifically comprises:
utilizing the second rotating speed proportional parameter, the second rotating speed integral parameter, and the second limiting torque to respectively replace the first rotating speed proportional parameter, the first rotating speed integral parameter, and the first limiting torque, and continuously iteratively controlling the driving motor to perform speed adjustment until gear engagement is completed; wherein the second limiting torque is a motor allowable torque calculated by the automatic speed change control device according to a torque requirement for gear engagement, and is configured to prevent gear engagement failure due to excessive torque.

6. The method according to claim 5, wherein, after gear engagement is completed, the method further comprises:
receiving a torque control mode sent by the automatic speed change control device, and switching from the rotating speed control mode to the torque control mode.

7. The method according to claim 6, wherein, after utilizing the second calibrated rotating speed and the second limiting torque to respectively replace the first calibrated rotating speed and the first limiting torque, and continuously iteratively controlling the driving motor to perform speed adjustment until gear engagement is completed, the method further comprises:
in a torque increase stage, receiving a zero-torque mode and an actual gear sent by the automatic speed change control device; and
receiving a torque increase command from the vehicle controller based on the zero-torque mode and the actual gear, wherein the zero-torque mode is configured to characterize a switch of a control main body from the automatic speed change control device to the vehicle controller.

8. A gear shifting process controller, applied to a pure electric vehicle, wherein the gear shifting process controller comprises:
a first acquisition module, which is configured to, in a neutral gear stage, acquire a rotating speed control mode sent by an automatic speed change control device;
a second acquisition module, which is configured to acquire a target motor rotating speed based on the rotating speed control mode;
a first control module, which is configured to control a driving motor to enter a quick speed-adjustment stage based on the target motor rotating speed; and in the quick speed-adjustment stage, utilize a first calibrated rotating speed and a first limiting torque to iteratively control the driving motor to perform speed adjustment; and
a second control module, which is configured to control the driving motor to enter a slow speed-adjustment stage if a rotating speed difference between an actual motor rotating speed under the quick speed-adjustment stage and the target motor rotating speed reaches a set rotating speed difference; and in the slow speed-adjustment stage, utilize a second calibrated rotating speed and a second limiting torque to respectively replace the first calibrated rotating speed and the first limiting torque, and continuously iteratively control the driving motor to perform speed adjustment until gear engagement is completed; wherein the second calibrated rotating speed is less than the first calibrated rotating speed, and the second limiting torque is less than the first limiting torque.

9. A gear shifting process control system, applied to a pure electric vehicle, wherein the gear shifting process control system comprises a gear shifting process controller and an automatic speed change control device; wherein the gear shifting process controller is configured to implement gear shifting control through the gear shifting process control method according to any one of claims 1 to 7.

10. A pure electric vehicle, wherein gear shifting control is implemented through the gear shifting process control method according to any one of claims 1 to 7.
